# FASCICULE DE BREVET EUROPEEN

(11) **EP 0 668 024 B1**
(45) Date de publication et mention de la délivrance du brevet: **28.03.2001**
(21) Numéro de dépôt: 94100959.9
(22) Date de dépôt: 24.01.1994
(51) Int. Cl.: A23K 1/10, A23K 1/14, A23K 1/18

(54) **Composition stérilisée pour alimentation animale et son procédé de préparation**
Sterilisierte Tierfutterzusammensetzung und Verfahren zu ihrer Herstellung
Sterilized animal food composition and a process for its production

(43) Date de publication de la demande: 23.08.1995
(73) Titulaire: SOCIETE DES PRODUITS NESTLE S.A., 1800 Vevey (CH)
(72) Inventeur: Delhovren, Nathalie, F-80000 Amiens (FR)
(74) Mandataire: Thomas, Alain

(56) Documents cités:
- EP-A- 0 078 186
- EP-A- 0 191 572
- EP-A- 0 265 740
- EP-A- 0 285 409
- CA-A- 560 490
- FR-A- 2 664 471
- US-A- 3 946 123

## Description

L'invention concerne une composition stérilisée pour alimentation animale contenant des morceaux irréguliers et de la sauce ou une base. L'invention concerne en outre le procédé de préparation de cette composition.

Le brevet EP 265740 concerne déjà un procédé de préparation de morceaux irréguliers pour l'alimentation animale. L'inconvénient de ce procédé est qu'il nécessite l'addition d'une quantité élevée de substances protéiques sèches (entre 15 et 35% en poids), ce qui conduit à une composition plus chère et d'autre part la formulation est contraignante, car cette teneur en substances protéiques est absolument nécessaire pour permettre la mise en oeuvre de ce procédé. Le brevet EP 285409 concerne un aliment stérilisé pour animaux domestiques comprenant des morceaux à base de sous-produits de viande (2 à 75%), de foie, de farine de soja et de plasma de sang et une sauce. La farine de soja est un produit ayant une forte teneur en protéines et dont le prix est relativement élevé.

Le but de la présente invention est de permettre la préparation d'une composition contenant des morceaux irréguliers, avec une faible présence de fines et ne nécessitant que peu ou pas d'addition de substances protéiques.

L'invention concerne une composition stérilisée pour alimentation animale contenant des morceaux et de la sauce ou une base, lesdits morceaux étant préparés à partir d'un mélange de 55 à 85% de viandes et sous-produits de viande, de 10 à 25% de céréales et entre 6 et 15% d'eau, lesdits morceaux étant irréguliers avec des découpes nettes et sans brisure, 97% desdits morceaux ayant une taille telle qu'ils ne passent pas à travers un tamis d'ouverture de mailles de 5 mm et entre 40 et 70% de ces morceaux ayant une forme qui n'est pas un volume géométrique à angles droits.

Par viande et sous-produits de viande, on entend toutes les parties carnées d'animaux à sang chaud abattus à l'état frais ou conservés par un traitement approprié et tous les produits et sous-produits provenant de la transformation du corps ou de partie de corps d'animaux à sang chaud. Par viande, on entend notamment la viande de poulet, lapin, bovins ou ovins et des abats. Par abats, on entend aussi bien des lobes de poumon, que des foies ou des rognons. Par sous-produits de viande, on entend la farine obtenue à partir de carcasses des animaux précités. Dans la présente description, les poissons et sous-produits de poisson seront considérés comme étant intégrés dans la définition de viande et sous-produits de viande. Par poisson et sous-produits de poisson, on ontend les poissons ou les parties de poissons à l'état frais ou conservés par un traitement approprié, ainsi que les sous-produits de leur transformation. Comme poisson, on peut utiliser du saumon ou des sardines et comme sous-produits de la farine de poisson.

Si on utilise du poisson ou sous-produits de poisson, ils sont utilisés à raison d'un maximum de 15%.

Dans la présente description, tous les pourcentages sont en poids.

Par céréales, on entend toutes les espèces de céréales quel que soit leur présentation ou les produits obtenus par la transformation de l'amande farineuse des céréales. On utilise de préférence du blé, du maïs ou du riz ainsi que leur farine.

Les morceaux de la composition selon l'invention contiennent moins de 3% de particules ayant des dimensions inférieures à 5 mm. Il est bien entendu que selon que l'on prévoit la composition pour les chats ou pour les chiens, la taille des morceaux sera différente. Pour le chien, 50 à 60% des morceaux ne passeront pas à travers un tamis d'ouverture de mailles de 16 mm. Pour le chat, par contre seulement 5 à 15% des morceaux ne passeront pas à travers un tamis d'ouverture de mailles de 14 mm, 45 à 65% des morceaux ayant une taille comprise entre 11 et 14 mm.

Le but de l'invention est aussi d'obtenir une composition avec des morceaux irréguliers, c'est-à-dire contenant de 40 à 70% des morceaux qui ont une forme qui n'est pas un volume géométrique à angle droit, à savoir de 40 à 70% de morceaux qui ne sont ni des cubes, ni des parallélépipèdes rectangles, mais possèdent des formes tridimensionnelles quelconques.

Les morceaux présents sont intégrés dans une sauce ou une base. Par sauce, on entend un mélange contenant jusqu'à 98% d'eau, le reste étant un ou des épaississants, tels que des hydrocolloïdes, des colorants et des aromatisants. Par base, on entend un mélange à base de 60 à 80% d'eau, de 20 à 40% de viandes finement broyées, le reste étant des gélifiants, des colorants et des arômes.

Les morceaux présents dans la composition peuvent également être préparés à partir d'un mélange contenant en outre entre 0 et 5% d'extraits de protéines végétales. Par extraits de protéines végétales, on entend tous les produits d'origine végétale dont les protéines ont été concentrées par un traitement approprié, qui contiennent au moins 50% de protéines brutes par rapport à la matière sèche et qui peuvent avoir été restructurées. Les protéines utilisées sont par exemple le gluten de blé ou de maïs, l'isolat de soja.

Dans une forme de réalisation préférée, les morceaux sont préparés à partir d'un mélange contenant 58 à 68% de viande et sous-produits de viande, entre 16 et 25% de céréales, entre 2 et 5% d'extraits de protéines végétales et entre 5 et 14% d'eau. Les viandes et sous-produits de viande comprennent de préférence un minimum de 10% de foie de porc ou de boeuf et de 0 à 5% de plasma de porc ou de boeuf en poudre et les céréales sont présents à raison d'un minimum de 10%, lesdites céréales étant des farines de blé, de maïs ou de riz. Ce qui permet d'assurer une texture suffisante du morceau à la découpe et d'éviter la production de fines et de déchirures.

Le plasma en poudre peut être avantageusement substitué par un minimum de 2% d'extraits de protéines végétales qui jouent le même rôle que le plasma.

Les morceaux peuvent contenir en outre jusqu'à 3% de colorants, de vitamines et de sels minéraux.

Dans la composition, les morceaux sont présents en une proportion comprise entre 20 et 50%, le reste étant la sauce ou la base.

Dans le cas d'une composition avec sauce, les morceaux sont présents à raison de 40 à 50%, tandis que pour la composition avec base, les morceaux sont présents à raison de 20 à 40%.

Dans le mélange pour préparer les morceaux, la teneur en eau sera ajustée entre 0 et 15% en fonction des teneurs en viandes et céréales pour obtenir un taux d'humidité finale des morceaux compris entre 50 et 60% et de préférence entre 52 et 58% pour assurer une tenue correcte de l'émulsion dans le procédé de fabrication.

L'invention concerne en outre le procédé de préparation de la composition décrite ci-dessus, dans lequel on mélange la viande et les sous-produits de viande avec les céréales et l'eau, on émulsifie le mélange, on extrude, on cuit, on pré-découpe, on refroidit et on cube, on mélange les morceaux ainsi obtenus avec la sauce ou la base, on effectue le remplissage dans un récipient et on stérilise.

Avant d'effectuer le mélange de la viande et sous-produits de viande, on effectue une réduction dimensionnelle desdites viandes pour arriver à des tailles de l'ordre de 12 mm. On mélange ensuite les viandes (et éventuellement aussi les poissons) avec les autres ingrédients (éventuellement aussi les extraits de protéines végétales) de la composition de morceaux jusqu'à homogénéisation pour l'obtention d'une pâte élastique.

On effectue ensuite une émulsification avec un émulsifieur double grille (par exemple du type Karl Schnell): L'émulsification a lieu à une température maximum de 15°C. Cette étape est nécessaire pour éviter en aval la séparation des matières grasses.

On pompe ensuite avec ou sans désaération la pâte émulsifiée vers un système de formage en continu permettant d'extruder des boudins de section ovale, rectangulaire ou carrée pouvant s'inscrire dans un cadre de 20 x 20 mm. Les boudins ainsi obtenus sont cuits par tout système de cuisson en continu (par exemple système à air chaud, vapeur, air chaud et vapeur ou microondes) pour obtenir une température à coeur comprise entre 80 et 95°C: pour ce faire, on utilise tunnel de cuisson porté à une température comprise entre 90 et 120°C. Les boudins sont ainsi figés par coagulation et sont tranchables à la sortie du dispositif de cuisson. On prédécoupe alors les boudins en continu à la sortie du système de cuisson en morceaux de 80 à 400 mm de long. Les morceaux sont ensuite raffermis par refroidissement à une température comprise entre 10 et 40°C: le refroidissement est fait de préférence à l'eau par aspersion ou immersion afin d'éviter le collage des morceaux les uns aux autres.

Il reste finalement à cuber les boudins refroidis. On utilise pour ce faire une cubeuse connue dans la technique, telle que la cubeuse URSCHEL: les morceaux sont alimentés sur le tapis de la cubeuse en continu par chute des morceaux en vrac et de manière aléatoire sur ce tapis. Le tapis est de préférence constamment aspergé d'eau pour faciliter le transit des morceaux et éviter leur collage dans la machine.

Les morceaux finaux obtenus sont irréguliers aussi bien dans leur taille que dans leur forme. Le choix de la section des boudins par rapport au choix des dimensions de coupe latérale et transversale de la cubeuse définit l'irrégularité de la forme. Le choix de la longueur des boudins définit l'irrégularité de la taille.

Les morceaux irréguliers ainsi obtenus sont mélangés de manière connue en soi avec la sauce ou la base et on effectue le remplissage dans des récipients de volumes différents suivant que l'on opère la fabrication pour les chats ou les chiens. On stérilise finalement la composition de manière classique à une température comprise entre 120 et 135°C pendant 20 à 100 min.

La suite de la description est faite en référence aux exemples.

### Exemple 1: Composition chat

On prépare un mélange à partir de 73% de carcasse de volaille, poumons de porc et foie de boeuf (broyés), 16% de farine de blé, 2% de plasma de boeuf en poudre, 6,8% d'eau et 2,2% de colorants, vitamines et sels minéraux. On émulsifie ce mélange à 12°C et on l'extrude sous forme d'un boudin ayant une section carrée de 12 mm de côté. On cuit ce boudin à une température de 90°C (tunnel à 100°C) et on découpe des morceaux de 80 mm de long. On les refroidit à 30°C et on découpe dans la cubeuse pour obtenir des morceaux irréguliers pour lesquels 3% ont une taille de moins de 5 mm, 30% une taille comprise entre 5 et 11 mm, 55% une taille comprise entre 11 et 14 mm, et 12% une taille supérieure à 14 mm. On mélange 45% de ces morceaux avec 55% de sauce préparée à partir de 98% d'eau, 1% de colorant et 1% de gomme de guar.

On effectue un remplissage dans des boîtes en fer blanc qu'on stérilise à 125°C pendant 40 min.

### Exemple 2: Composition chat

On prépare un mélange à partir de 56% de carcasse de volaille, poumons de porc et foie de porc (broyés), 13% de poissons, 16% de farine de blé, 2% de plasma, 10,8% d'eau et 2,2% de colorants, vitamines et sels minéraux. On opère ensuite comme dans l'exemple 1, pour obtenir des morceaux irréguliers de même dimension que ceux de l'exemple 1. On incorpore 30% de ces morceaux (ayant une teneur en eau de 58%) dans une base préparée à partir de 23% de carcasse de volaille, 1% de gélifiant, 1% de colorant et arôme et 75% d'eau.

On fait ensuite un remplissage dans les boîtes en fer blanc qu'on stérilise à 127°C pendant 60 mm.

### Exemple 3: Composition chien

On mélange 69% de carcasse de volaille, poumons de boeuf et foie de porc avec 20% de farine de blé, 1% de plasma de boeuf en poudre, 7,8% d'eau et 2,2% de colorants, vitamines et sels minéraux. On émulsifie ce mélange à 12°C et on l'extrude sous forme d'un boudin ayant une section rectangulaire de 17 x 9 mm. On cuit ce boudin à une température de 90°C (tunnel à 100°C) et on découpe des morceaux de 80 mm de long. On les refroidit à 30°C et on découpe dans la cubeuse pour obtenir des morceaux irréguliers pour lesquels 3% ont une taille de moins de 5 mm, 37% une taille comprise entre 5 et 16 mm et 60% une taille supérieure à 16 mm.

On mélange 50% de ces morceaux avec 50% de sauce préparée à partir de 98% d'eau, 1% colorant et 1% de gamme de guar. On effectue un remplissage dans des boîtes en fer blanc qu'on stérilisé à 125°C pendant 60 min.

## Revendications

1. Composition stérilisée pour alimentation animale contenant des morceaux et de la sauce ou une base, caractérisée en ce que lesdits morceaux sont préparés à partir d'un mélange de 55 à 85% de viandes et sous-produits de viande, de 10 à 25% de céréales, lesdites céréales étant choisies dans le groupe constitué par le blé, le maïs , le riz, ainsi que leur farine et entre 0 et 15% d'eau, en ce que lesdits morceaux sont irréguliers avec des découpes nettes et sans brisure, 97% desdits morceaux ayant une taille telle qu'ils ne passent pas à travers un tamis d'ouverture de mailles de 5 mm et en ce que entre 40 et 70% de ces morceaux ont une forme qui n'est pas un volume géométrique à angle droit.

2. Composition selon la revendication 1, caractérisée en ce que lesdits morceaux sont préparés à partir d'un mélange contenant en outre entre 0 et 5% d'extraits de protéines végétales.

3. Composition selon l'une des revendications 1 ou 2, caractérisé en ce que les morceaux sont préparés à partir d'un mélange contenant 58 à 68% de viande et sous-produits de viande, entre 16 et 25% de céréales, entre 2 et 5% d'extraits de protéines végétales et entre 5 et 14% d'eau.

4. Composition selon l'une des revendications 1 à 3, caractérisée en ce qu'elle contient entre 20 et 50% de morceaux, le reste étant la sauce ou la base.

5. Composition selon l'une des revendications 1 à 4, caractérisée en ce que les morceaux ont une teneur en eau comprise entre 50 et 60%.

6. Procédé de préparation de la composition selon l'une des revendications 1 à 5, dans lequel on mélange la viande et les sous-produits de viande avec les céréales et l'eau, on émulsifie le mélange, on extrude, on cuit, on prédécoupe, on refroidit à une température comprise entre 10 et 40°C et on cube, on mélange les morceaux ainsi obtenus avec la sauce ou la base, on effectue le remplissage dans un récipient et on stérilise.

7. Procédé selon la revendication 6, caractérisé en ce qu'on émulsifie à une température de 15°C maximum.

8. Procédé selon l'une des revendications 6 ou 7, caractérisé en ce qu'on extrude sous forme de boudin ayant une section s'inscrivant dans un cadre de 20 x 20 mm.

9. Procédé selon l'une des revendications 6 à 8. caractérisé en ce qu'on cuit le boudin pour qu'il ait une température comprise entre 80 et 95°C.

10. Procédé selon l'une des revendications 6 à 9, caractérisé en ce qu'on prédécoupe pour obtenir des morceaux ayant une longueur comprise entre 80 et 400 mm.

11. Procédé selon l'une des revendications 6 à 10, caractérisé en ce qu'on alimente la cubeuse avec les morceaux de manière aléatoire.

## Patentansprüche

1. Sterilisierte Tierfutterzusammensetzung, die Stücke und Sauce oder eine Basis enthält, dadurch gekennzeichnet, daß die Stücke aus einer Mischung aus 55 bis 85 % Fleisch oder Fleisch-Nebenprodukten, 10 bis 25 % Getreide, das ausgewählt ist aus der Gruppe, die besteht aus Weizen, Mais, Reis sowie deren Mehl, und 0 bis 15 % Wasser hergestellt sind, und die Stücke irregulär mit glatten Schnittflächen und ohne Brüche sind, wobei 97 % der Stücke eine solche Größe aufweisen, daß sie nicht durch ein Sieb mit einer Maschenweite von 5 mm hindurchgehen und zwischen 40 und 70 % der Stücke von einer Form sind, die kein rechtwinkliges geometrisches Volumen darstellt.

2. Zusammensetzung nach Anspruch 1, dadurch gekennzeichnet, daß die Stücke aus einer Mischung hergestellt sind, die außerdem 0 bis 5 % Pflanzenproteinextrakte enthält.

3. Zusammensetzung nach Ansruch 1 oder 2, dadurch gekennzeichnet, daß die Stücke aus einer Mischung hergestellt sind, die von 58 bis 68 % Fleisch oder Fleisch-Nebenprodukte, von 16 bis 25 % Getreide, von 2 bis 5 % Pflanzenproteinextrakte und von 5 bis 14% Wasser enthält.

4. Zusammensetzung nach einem der Ansprüche 1 bis 3, dadurch gekennzeichnet, daß sie von 20 bis 50 % Stücke enthält und der Rest Sauce oder Basis ist.

5. Zusammensetzung nach einem der Ansprüche 1 bis 4, dadurch gekennzeichnet, daß die Stücke einen Wassergehalt von 50 bis 60 % aufweisen.

6. Verfahren zur Herstellung einer Zusammensetzung nach einem der Ansprüche 1 bis 5, bei dem man das Fleisch und die Fleisch-Nebenprodukte mit dem Getreide und dem Wasser vermischt, die Mischung emulgiert, extrudiert, kocht, vorschneidet, auf eine Temperatur von 10 bis 40°C abkühlt und würfelt, man die so erhaltenen Stücke mit der Sauce oder Basis mischt, in einen Behälter abfüllt und sterilisiert.

7. Verfahren nach Anspruch 6, dadurch gekennzeichnet, daß man bei einer Temperatur von maximal 15 °C emulgiert.

8. Verfahren nach einem der Ansprüche 6 oder 7, dadurch gekennzeichnet, daß man in Form eines Strangs mit einem Querschnitt, der von einem Geviert von 20 x 20 mm umschrieben wird, extrudiert.

9. Verfahen nach einem der Ansprüche 6 bis 8, dadurch gekennzeichnet, daß man den Strang kocht, so daß er eine Temperatur von 80 bis 95 °C aufweist.

10. Verfahren nach einem der Ansprüche 6 bis 9, dadurch gekennzeichnet, daß man so vorschneidet, daß man Stücke mit einer Länge von 80 bis 400 mm erhält.

11. Verfahren nach einem der Ansprüche 6 bis 10, dadurch gekennzeichnet, daß man die Würfelschneidmaschine mit den Stücken in zufälliger Anordnung beschickt.

## Claims

1. Sterilized composition for animal foodstuffs containing pieces and sauce or a base, characterized in that the said pieces are prepared from a mixture of 55 to 85 % meat and meat by-products, 10 to 25 % cereals, the said cereals being chosen from the group consisting of wheat, maize, rice as well as the flour thereof and between 0 and 15 % water, in that the pieces are irregular with clean cuts and without breaks, 97 % of the said pieces having a size such that they do not pass through a sieve with a 5 mm mesh opening and in that between 40 and 70 % of these pieces have a shape that is not a right-angled geometric volume.

2. Composition according to claim 1, characterized in that the said pieces are prepared from a mixture additionally containing between 0 and 5 % of vegetable protein extracts.

3. Composition according to either of claims 1 or 2, characterized in that the pieces are prepared from a mixture containing 58 to 68 % meat and meat by-products, between 16 and 25 % cereals, between 2 and 5 % vegetable protein extracts and between 5 and 14 % water.

4. Composition according to one of claims 1 to 3, characterized in that it contains between 20 and 50 % of pieces, the remainder being the sauce or base.

5. Composition according to one of claims 1 to 4, characterized in that the pieces have a water content of between 50 and 60 %.

6. Process for preparing the composition according to one of claims 1 to 5, wherein the meat and meat by-products are mixed with the cereals and water, the mixture is emulsified, extruded, cooked, precut, cooled to a temperature of between 10 and 40°C and diced, the pieces thus obtained are mixed with the sauce or base, a receptacle is filled and sterilization is carried out.

7. Process according to claim 6, characterized in that emulsification is carried out at a maximum temperature of 15°C.

8. Process according to either of claims 6 or 7, characterized in that extrusion is carried out in the form of a rope having a cross section inscribed in a 20 × 20 mm frame.

9. Process according to one of claims 6 to 8, characterized in that the rope is cooked so that it has a temperature of between 80 and 95°C.

10. Process according to one of claims 6 to 9, characterized in that precutting is carried out so as to obtain pieces having a length of between 80 and 400 mm.

11. Process according to one of claims 6 to 10, characterized in that the dicer is fed with pieces in a random manner.
